# EUROPÄISCHE PATENTANMELDUNG

(11) **EP 0 987 566 A2**
(43) Veröffentlichungstag der Anmeldung: **22.03.2000**
(21) Anmeldenummer: 99117344.4
(22) Anmeldetag: 03.09.1999
(51) Int. Cl.: G01V 3/10

(54) **Fahrzeugdetektor mit mindestens einer Induktivschleife als Sensor und Verfahren zum Durchführen einer Fahrzeugdetektion**

(30) Priorität: 15.09.1998 DE 19842209
(71) Anmelder: SIEMENS AKTIENGESELLSCHAFT, 80333 München (DE)
(72) Erfinder: Pieverling, Klaus, Dr., 82515 Wolfratshausen (DE)

(57) **Zusammenfassung**

Bei Fahrzeugdetektoren mit mindestens einer Induktivschleife (1) als Sensor wird eine Oszillatorschaltung (4) zum Anregen dieser Induktivschleife, eine Abtastschaltung (6, 7) zum Feststellen des Funktionszustandes der Induktivschleife und eine daran angeschlossene Auswerteeinrichtung zum Ableiten von Detektorsignalen eingesetzt. Konventionell bilden Induktivschleife (1) und anregende Oszillatorschaltung (4) einen individuell abgestimmten Resonanzkreis, dessen Frequenz sich verschiebt, sobald sich ein Fahrzeug im Erfassungsbereich der Induktivschleife aufhält. Aus einer Messung der Frequenzänderung werden die Detektorsignale abgeleitet. Die individuelle Resonanzabstimmung der Induktivschleifen ist aufwendig, die Auswertung störanfällig. Erfindungsgemäß weist die Oszillatorschaltung einen Festfrequenzoszillator (4) auf, der zum Anregen der Induktivschleife (1) durch ein Sendesignal (ss) an einen ihrer zwei Anschlüsse (2 bzw. 3) direkt angeschlossen ist. Ferner ist zwischen dem Festfrequenzoszillator (4) und dem anderen, einen Summenpunkt (S) bildenden Anschluß der Induktivschleife (1) ein Phasen-/Amplitudenregler (5) zum Zuführen eines aus dem Sendesignal (ss) amplituden- und phasengeregelt abgeleiteten Kompensationssignales (ks) angeordnet. Dabei bilden die Induktivschleife (1), der Festfrequenzoszillator (4) und der Phasen-/Amplitudenregler (5) eine Brückenschaltung, bei der sich Sendesignal (ss) und Kompensationssignal (ks), bezogen auf die resultierende Spannung am Summenpunkt (S), im Ruhezustand der Induktivschleife (1) zu Null summieren. Aus einer davon abweichenden Spannung an diesem Summenpunkt (S) wird ein Detektionssignal für die Anwesenheit eines Fahrzeugs im Erfassungsbereich der Induktionsschleife (1) abgeleitet.

## Beschreibung

Fahrzeugdetektoren werden zum Erkennen von Fahrzeugen im Straßenverkehr eingesetzt, wobei je nach Anwendungsfall nicht nur Fahrzeuge als solche detektiert werden, sondern gegebenenfalls auch die Fahrzeugart und/oder die Geschwindigkeit von Fahrzeugen ermittelt wird. Als Sensoren derartiger Fahrzeugdetektoren werden u. a. seit langem Induktivschleifen verwendet, die fest in die Fahrbahn eines Verkehrsweges, falls erforderlich auch spurbezogen, eingesetzt sind.

Derartige Fahrzeugdetektoren mit Induktivschleifen als Sensoren nutzen den Effekt aus, daß sich die Schleifeninduktanz in Abhängigkeit von der metallischen Masse eines sich im Erfassungsbereich der Induktivschleife bewegenden Fahrzeuges ändert. Es darf wohl als seit langem bekannt vorausgesetzt werden, daß die Induktivschleife zur Auswertung dieses Effektes mit einem angepaßten Kondensator zu einem Schwingkreis ergänzt wird, der durch eine Anregeschaltung zum Schwingen gebracht wird. Als Ruhefrequenz sei diejenige Frequenz dieses Schwingkreises bezeichnet, die auftritt, solange sich kein Fahrzeug im Erfassungsbereich der Induktivschleife aufhält. Dann resultiert eine durch ein Fahrzeug verursachte Änderung der Schleifeninduktanz in einer Veränderung der Schwingfrequenz gegenüber dieser Ruhefrequenz. Die Änderung ist, vereinfacht ausgedrückt, um so höher, je größer die metallische Masse des erfaßten Fahrzeuges ist.

Bei dieser bekannten, sogenannten Oszillatorlösung, wird also die aktuelle Schwingfrequenz des die Induktivschleife enthaltenden Schwingkreises gemessen, d.h. bei digitaler Auswertung die Frequenz gezählt. Zur weiteren Auswertung wird die so ermittelte momentane Frequenz des Schwingkreises zu seiner Ruhefrequenz in Beziehung gesetzt und das Ergebnis als Detektorsignal ausgegeben, das anzeigt, ob sich ein Fahrzeug im Erfassungsbereich der entsprechenden Induktivschleife befindet und gegebenenfalls auch, um welche Fahrzeugart es sich dabei handelt.

Wie die Dokumente EP-A-0 521 627, EP-A-0 523 852 und EP-A-0 523 853, die hier beispielhaft zitiert sind, lehren, ist diese bekannte Oszillatorlösung relativ empfindlich in bezug auf verschiedene Arten von Störeinflüssen. Zu solchen Störeinflüssen zählen unter anderem Störungen durch benachbarte Induktivschleifen oder auch in räumlicher Nachbarschaft der Induktivschleifen verlegte, stromführende Kabel. Wie die vorstehend zitierten Dokumente belegen, muß ein erheblicher Aufwand getrieben werden, um derartige Störeffekte, die auf magnetischer Einkopplung beruhen, auszugleichen. Das bereits zitierte Dokument EP-A- 0 523 852 ist ferner ein Beispiel dafür, daß die bekannte Oszillatorlösung neben dem technischen Aufwand zur Störungsbeseitigung einen weiteren prinzipiellen systemtechnischen Nachteil hat, sie belegt zur Signalauswertung ein breites Frequenzband. Signaltechnisch betrachtet wäre beispielsweise lediglich eine Bandbreite von 500 Hz erforderlich, wenn man eine Auswertezeit von 2ms zugrundelegt. Das bei der Auswertung von Detektorsignalen belegte Frequenzband ist notwendigerweise aber um Größenordnungen breiter.

Der vorliegenden Erfindung liegt daher die eine Teilaufgabe zugrunde, für einen Fahrzeugdetektor der eingangs genannten Art eine weitere Ausführungsform zu schaffen, die eine sichere, vor allem möglichst störungsfreie Fahrzeugdetektion mit vertretbarem elektronischen Aufwand ermöglicht. Eine weitere Teilaufgabe der vorliegenden Erfindung besteht darin, ein Verfahren zur Fahrzeugdetektion mittels eines Fahrzeugdetektors der eingangs genannten Art anzugeben, bei dem die mit der bekannten Oszillatorlösung verbundenen Nachteile, insbesondere im Hinblick auf den Aufwand zur Störungsbeseitigung, vermieden werden.

Bei einem Fahrzeugdetektor der eingangs genannten Art wird die erste Teilaufgabe erfindungsgemäß mit dem im Kennzeichen des Patentanspruches 1 beschriebenen Merkmalen gelöst.

Bei dieser erfindungsgemäßen Lösung wird nun nicht etwa versucht, die bekannte, vorstehend diskutierte Oszillatorlösung weiterzubilden und dabei Störeffekte besser auszuschalten, sondern es wird ein völlig anderer Weg beschritten. Dabei hat die erfindungsgemäße Lösung den Vorteil, daß nun nicht etwa neue Sensoren in die Fahrbahn eingelassen werden müssen, vielmehr können bereits verlegte Induktionsschleifen weiterhin benutzt werden. Das erleichtert den Einsatz der erfindungsgemäßen Lösung erheblich.

Dieser Vorteil kann ausgenutzt werden, weil auch bereits verlegte Induktivschleifen lediglich in einer völlig anderen Weise als bisher üblich angeregt und entsprechende Schleifenzustände ausgewertet werden. Dazu ist ein Ende der Induktivschleife an einen Festfrequenzgenerator angeschlossen. Damit wird also die Induktivschleife - und das im Gegensatz zu der bekannten Oszillatorlösung - durch das Sendesignal mit einer definierten, unveränderlichen Betriebsfrequenz angeregt. Dies bedeutet mit anderen Worten, daß bei der vorliegenden Lösung keine individuelle Resonanzabstimmung jeder einzelnen Induktivschleife vorgesehen ist. Statt dessen wird dem anderen Ende der Induktivschleife aus dem Festfrequenzgenerator in Form des Kompensationssignals Strom über den Phasen-/Amplitudenregler zugeführt. Es sei der Verbindungspunkt des Ausganges des Phasen-/Amplitudenreglers mit dem zweiten Eingang der Induktivschieife als Summenpunkt definiert, weil sich dort Sendesignal und Kompensationssignal summieren. Erfindungsgemäß ist der über den Phasen-/Amplitudenregler der Induktivschleife zugeführte Strom nach Phase und Amplitude derart eingestellt, daß die Spannung an diesem Summenpunkt im Ruhezustand der Induktivschleife zu Null wird.

Damit ist die Induktivschleife in Verbindung mit dem Festfrequenzgenerator und dem Phasen-/Amplitudenregler als eine Brückenschaltung aufzufassen. Die am Summenpunkt abzugreifende Spannung, auch als Brückenspannung zu bezeichnen, wird verstärkt, digitalisiert und einer Auswerteschaltung zugeführt. Im Ruhezustand der Induktivschleife ist die digitalisierte Brückenspannung voraussetzungsgemäß Null. Kommt jedoch ein Fahrzeug in den Erfassungsbereich der Induktivschleife, so verändert sich naturgemäß deren Induktanz. Damit gerät die Brücke aus dem Gleichgewicht Daraus resultiert eine von Null verschiedene Brückenspannung am Summenpunkt, die in der beschriebenen Weise der Auswerteschaltung zugeführt wird.

Die in Patentanspruch 1 beschriebene erfindungsgemäße Lösung berücksichtigt, daß die erwähnten Störeinflüsse, die bei der bekannten Oszillatorlösung zu erheblichen Problemen führen, im wesentlichen nicht auf dynamisch veränderlichen Störeinflüssen beruhen. Sie basieren insbesondere auf statischen Effekten, die dennoch bei der bekannten Oszillatorlösung nur mit erheblichem technischem Aufwand auszugleichen sind. Bei der erfindungsgemäßen Lösung dagegen wird die Induktivschleife im Ruhezustand individuell derart angeregt, daß das zu bewertende Meßsignal den Wert Null hat. Dieser Funktionszustand wird mittels eines durch den Phasen-/Amplitudenregler geschlossenen Regelkreises erreicht, der selektiv in einem schmalen Frequenzband arbeitet. Dieser Funktionszustand ist dadurch völlig unabhängig davon zu stabilisieren, in welchem Umfang die betreffende Induktivschleife in ihrer jeweiligen Umgebung durch außerhalb dieses Frequenzbandes liegende elektromagnetische Einstrahlung beeinflußt wird.

Wie in Unteransprüchen definierte Weiterbildungen der im Patentanspruch 1 beschriebenen Lösung zeigen, ist es ohne weiteres möglich, in dieser Weise auch eine Gruppe von Induktivschleifen anzuregen und deren jeweilige Spannung am Summenpunkt der einzelnen Schleife auszuwerten. Auch hier bietet sich der Vorteil, daß somit bestehende Anlagen zur Verkehrslenkung mittels Fahrzeugdetektion, für die in diesem Falle bereits eine Mehrzahl von Induktivschleifen in die Fahrbahnen des Verkehrsweges verlegt sind, weitgehend weiter verwendbar sind. Es bedarf lediglich des Umrüstens an der Schnittstelle zwischen den fest verlegten Induktivschleifen und den in der Anlage vorgesehenen Auswerteeinrichtungen für die Schleifenzustände. Mittels eines zusätzlichen Multiplexers, der in die vorstehend beschriebene Schaltung eingefügt ist, lassen sich die Signalzustände der zu einer Gruppe zusammengefaßten Induktivschleifen sequentiell nacheinander messen und in der beschriebenen Weise auswerten.

Dem als Lösung der weiteren Teilaufgabe im Patentanspruch 10 beschriebene Verfahren zur Fahrzeugdetektion liegt dieselbe Überlegung zugrunde, der mindestens einen Induktivschleife im angeregten Ruhezustand über ihre beiden Anschlüsse jeweils Signale, das Sendesignal einerseits bzw. das Kompensationssignal andererseits, so zuzuführen, daß sich am Summenpunkt meßbar ein Gleichgewicht in Form der Spannung mit dem Wert Null ergibt. Besonders vorteilhaft ist es, bei einer Gruppe oder auch mehreren Gruppen von derart angeregten Induktivschleifen, wie in einer der Weiterbildungen beschrieben, das Sendesignal - davon abgeleitet auch das Kompensationssignal - als einen getasteten Puls auszubilden. Dies eröffnet die Möglichkeit, für die sequentielle Auswertung der Zustände der einzelnen Induktivschleifen von einer Induktivschleife auf die nächste problemlos in den Austastlücken des Pulssignales umzuschalten.

Dabei werden alle Induktivschleifen einer Gruppe durch dasselbe Sendesignal angeregt. Die über den Multiplexer erfolgende Umschaltung der Bewertung einer Induktivschleife zur nächsten wird in einem Nullbereich des modulierten Sendesignals durchgeführt. Daraus resultiert, daß Umschaltprobleme, die bei Induktivitäten während des Stromflusses unvermeidbar auftreten, vermieden werden und daß sich die Betriebsbandbreite auf das signaltechnisch notwendige Maß reduzieren läßt. Dies ist eine Voraussetzung dafür, eine Mehrzahl solcher Multiplexsysteme mit lediglich leicht versetzter Betriebsfrequenz, d.h. eine Vielzahl von Induktivschleifen in einer größeren Anlage zur Verkehrslenkung nebeneinander zu betreiben.

Zusätzliche Vorteile der erfindungsgemäßen Lösung und andere Weiterbildungen werden im folgenden anhand der Zeichnung näher erläutert Dabei zeigt:
Figur 1 ein Prinzipschaltbild für die Anregung einer Induktivschleife sowie für die Auswertung eines Meßsignales dieser Induktivschleife,
Figur 2 eine Schaltungsanordnung, in der eine Mehrzahl von nebeneinander angeregten Induktivschleifen mittels eines Multiplexers gemäß der in Figur 1 dargestellten Prinzipschaltung betrieben werden,
Figur 3 ein Ausführungsbeispiel einer prozessorgesteuerten Anlage zur Fahrzeugdetektion, die eine Vielzahl von Induktivschleifen als Fahrzeugsensoren verwendet und
Figur 4 eine Reihe von Impulsdiagrammen zur Erläuterung der in Figur 3 dargestellten Anlage zur Fahrzeugdetektion.

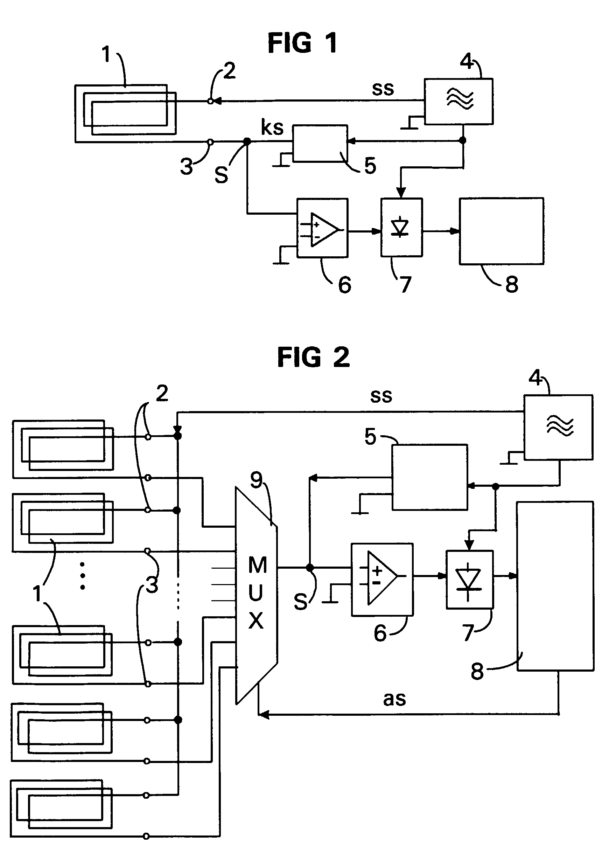

In Figur 1 ist ein Prinzipschaltbild für einen Fahrzeugdetektor dargestellt, bei dem als Sensor eine induktive Schleife 1 eingesetzt wird. Die Induktivschleife 1 besitzt zwei Anschlüsse 2, 3. Der eine Anschluß 2 der Induktivschleife 1 ist an den Ausgang eines Festfrequenzgenerators 4 angeschlossen, der damit die Induktivschleife 1 mit einen definierten, vorgegebenen Betriebsfrequenz anregt. Das der Induktivschleife 1 über den Anschluß 2 zugeführte Signal sei deshalb als Sendesignal ss bezeichnet. Der zweite Anschluß 3 der Induktivschleife 1 ist an einen weiteren Ausgang des Festfrequenzgenerators 4 über einen Phasen-/Amplitudenregler 5 angeschlossen. Das der Induktivschleife 1 über ihren zweiten Anschluß 3 vom Phasen-/Amplitudenregler 5 zugeführte Signal sei als Kompensationssignal ks bezeichnet. Denn es wird in Bezug auf das Sendesignal ss nach Phase und Amplitude so geregelt, daß sich beide Signale ss und ks an einem Summenpunkt S, der im Beispiel im wesentlichen mit dem zweiten Anschluß 3 der Induktivschleife 1 zusammenfällt, summieren. Dabei ist das Kompensationssignal ks so geregelt, daß sich im Ruhezustand der Induktivschleife 1 für die am Summenpunkt zu messende Spannung der Wert Null ergibt. Als Ruhezustand der Induktivschleife 1 wird dabei derjenige Funktionszustand bezeichnet, bei dem sich kein Fahrzeug im Erfassungsbereich der Induktivschleife 1 befindet. Man kann daher die vorstehend beschriebene Anordnung als eine Schaltungsbrücke verstehen, die im Ruhezustand des Fahrzeugdetektors im Gleichgewicht ist.

Fährt dagegen ein Fahrzeug in den Erfassungsbereich der Induktivschleife 1 ein, so verändert sich deren Induktanz, was eine Veränderung der Spannung am Summenpunkt S bewirkt. Um ein Fahrzeug im Erfassungsbereich der Induktivschleife 1 zu detektieren, ist daher lediglich der Spannungszustand am Summenpunkt S zu messen und auszuwerten. Dazu ist ein Vorverstärker 6 vorgesehen, der mit einem bewertenden Signaleingang an den Summenpunkt S angeschlossen ist und beispielsweise als Differenzverstärker ausgebildet sein kann. Das am Summenpunkt abgegriffene und über diesen Vorverstärker 6 verstärke analoge Meßsignal wird einem Gleichrichter 7 zugeführt.

Die Funktion dieses Gleichrichters 7 besteht im wesentlichen darin, aus dem am Summenpunkt S abgegriffenen hochfrequenten Meßsignal ein Gleichspannungssignal abzuleiten, dessen jeweiliger Pegel ein Maß dafür ist, ob sich kein Fahrzeug bzw. ein Fahrzeug im Erfassungsbereich der Induktivschleife 1 befindet und gegebenenfalls auch, um welche Fahrzeugart es sich dabei handelt. Von besonderem Vorteil ist es, dieser Schaltungseinheit - wie in Figur 1 angedeutet - das Ausgangssignal des Festfrequenzgenerators 4 als Steuersignal zuzuführen und dabei den Gleichrichter 7 als eine phasengesteuerte Schaltung zu realisieren. Damit wird eine schmalbandige Auswertung des am Summenpunkt S abgegriffenen Meßsignals ermöglicht. Dieses am Ausgang des Gleichrichters 7 abgegebene, aufbereitete Signal wird einer Auswerteeinrichtung 8 zugeführt. Die Verarbeitung des der Auswerteeinrichtung 8 zugeführten Signales selbst ist im hier vorliegenden Fall von untergeordneter Bedeutung. Hierzu kann auf bekannte Einrichtungen zur Fahrzeugdetektion verwiesen werden.

In Figur 2 ist schematisch in einem Blockschaltbild dargestellt, daß sich das vorstehend anhand von Figur 1 geschilderte Funktionsprinzip auch zu einer Multiplexschaltung erweitern läßt, bei der eine Gruppe von beispielsweise acht Induktivschleifen 1 als individuelle Fahrzeugsensoren vorgesehen ist. Bei dieser Ausführungsform wird das von dem Festfrequenzgenerator 4 abgegebene Sendesignal ss den untereinander verbundenen ersten Anschlüssen 2 der Induktivschleifen 1 parallel zugeführt. Die zweiten Anschlüsse 3 dieser Induktivschleifen sind über einen Multiplexer 9 mit dem hier nun gemeinsamen Summenpunkt S verbunden. Analog zu Figur 1 ist dieser Summenpunkt S mit einem Ausgang des Festfrequenzgenerators über den Phasen-/Amplitudenregler 5 einerseits verbunden, um das Kompensationssignal ks zuzuführen.

Andererseits wird an diesem Summenpunkt S wiederum das Meßsignal abgegriffen und über den Vorverstärker 6 sowie den vorzugsweise auch hier phasengesteuerten Gleichrichter 7 der Auswerteeinrichtung 8 zugeführt. Dem Multiplexer 9 werden, wie in Figur 2 angedeutet, von der Auswerteeinrichtung 8 abgegebene Auswahlsignale as zugeführt, um die einzelnen Induktivschleifen 1 nacheinander anzusteuern und zu vermessen. Wie nachfolgend noch näher ausgeführt wird, wird das Sendesignal ss sowie das Kompensationssignal ks bezogen auf ihre Amplituden weichmoduliert. Denn dies ermöglicht das Umschalten des Multiplexers 9 von einer Induktivschleife 1 auf die nächste im Nullbereich der Modulation. Diese Schleifenumschaltung vermeidet Umschaltprobleme, die sich sonst bei einer ja im wesentlichen als Blindwiderstand aufzufassenden Induktivschleife 1 während des Stromflusses ergäben.

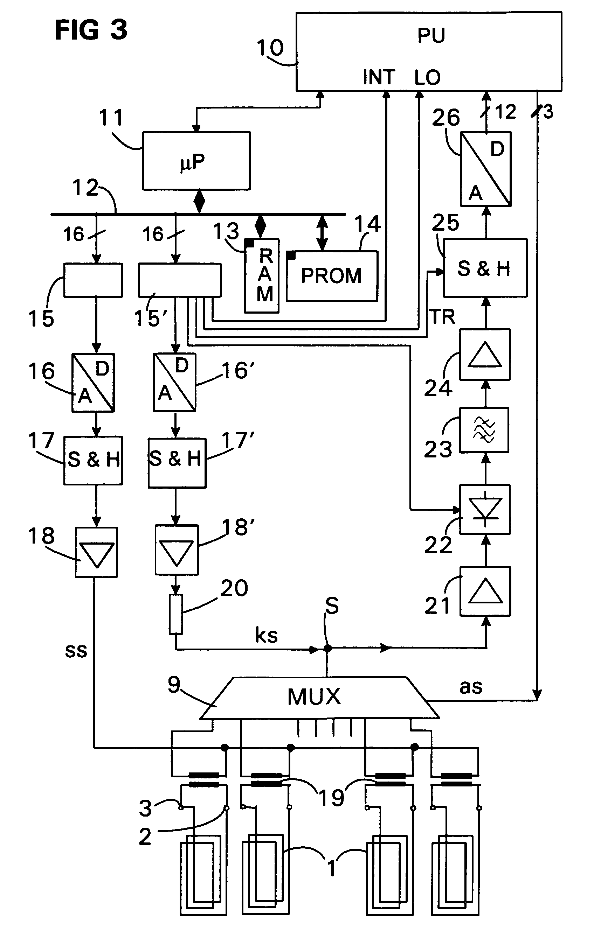

In Figur 3 ist ergänzend eine Sende- und Auswerteeinrichtung eines Fahrzeugdetektors mit - im Beispiel - acht angeschlossenen Induktivschleifen 1 dargestellt. Kernstück dieser Einrichtung ist eine erste Prozessoreinheit 10, die im Sinne einer "Master-Slave"-Konfiguration über eine serielle Schnittstelle mit einer zweiten Prozessoreinheit, hier beispielsweise einem Signalprozessor 11 zusammenarbeitet. Der Signalprozessor 11 dient in Verbindung mit den an ihn angeschlossenen bzw. mit ihm zusammenarbeitenden Einheiten als ein digital ausgebildeter Generator zum Erzeugen des Sendesignales ss bzw. der Kompensationssignale ks für die angeschlossenen Induktivschleifen 1. Dazu ist der Signalprozessor 11 über eine Busleitung 12 mit einem Arbeitsspeicher 13 und einem programmierbaren Festwertspeicher 14 verbunden.

Um das Sendesignal ss digital zu erzeugen, ist an die Busleitung 12 ein erster Zwischenspeicher 15, vorzugsweise ausgebildet als Register mit einer Breite von 16 Bit angeschlossen, das beispielsweise in Form von D-Flip-Flops ausgebildet sein kann. In diesem Zwischenspeicher 15 werden Momentanwerte des modulierten Sendesignales ss in digitaler Form zwischengespeichert und dann getaktet einem angeschlossenen Digital-Analog-Wandler 16 zugeführt. An diesen Digital-Analog-Wandler 16 ist eine Abtast- und Halteeinheit 17 mit Tiefpaßcharakteristik angeschlossen, die ihrerseits mit einem Endverstärker 18 verbunden ist. Die Einrichtungen 15 bis 18 bilden, gesteuert durch den Signalprozessor 11, den in den Figuren 1 bzw. 2 dargestellten Festfrequenzgenerator in einer digitalen Schaltungstechnik, mit dem das Sendesignal ss erzeugt wird. Dieses wird den Induktivschleifen 1 parallel über Übertrager 19 zugeführt.

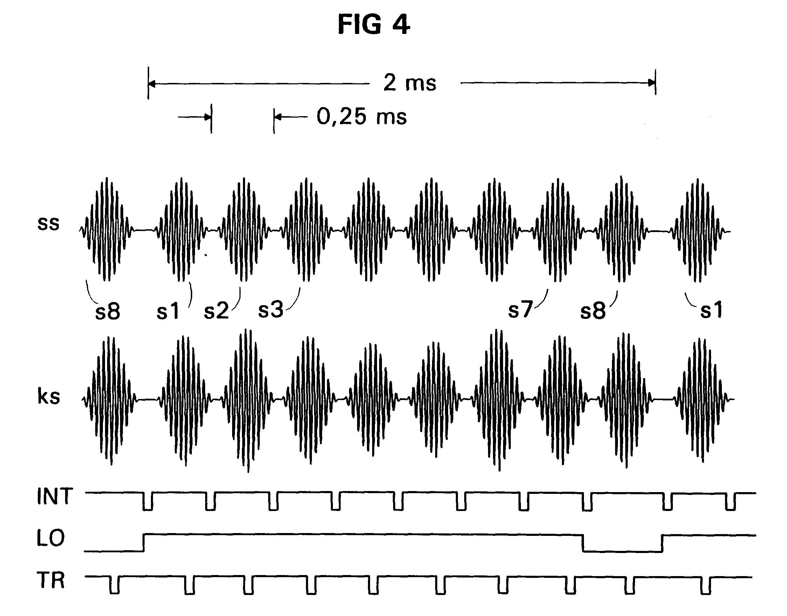

In Figur 4 ist in der ersten Zeile dieses so erzeugte Sendesignal ss in Form eines Impulsdiagrammes dargestellt. Dieses Impulsdiagramm verdeutlicht, daß das Sendesignal ss ein gepulstes Signal ist, dessen Impulse als eine weich einsetzende, amplitudenmodulierte Schwingung einer definierten, vorgegebenen Betriebsfrequenz ausgebildet sind.

In ähnlicher Weise wird, wie in Figur 3 dargestellt, mit der Schaltungsanordnung eines weiteren Zwischenspeichers 15', eines weiteren Digital-Analog-Wandlers 16', einer weiteren Abtast- und Halteeinheit 17' sowie eines weiteren Endverstärkers 18', wiederum gesteuert durch den Signalprozessor 11, das entsprechende Kompensationssignal ks erzeugt, dessen einzelne Impulse jeweils individuell auf eine bestimmte der Induktivschleifen 1 abgestimmt sind. Dieses Kompensationssignal ks wird über einen Kompensationswiderstand 20 an den Summenpunkt S und den Eingang des Multiplexers 9 geführt. Über den Multiplexer 9 selektiv durchgeschaltet wird es Impuls für Impuls dem jeweils ausgewählten der Übertrager 19, damit der daran angeschlossen Induktivschleife 1 angeboten.

In Figur 4, zweite Zeile sind die entsprechenden Impulsformen des Kompensationssignals ks für die im Ausführungsbeispiel von Figur 3 vorgesehenen acht Induktivschleifen 1 dargestellt. Eine genauere Betrachtung der beiden Impulsdiagramme ergibt dabei folgendes. Das Sendesignal ss wiederholt sich in einer Sequenz von acht hochfrequenten Impulsen s1 bis s8 nach kurzer Verzögerungszeit mit der nächsten Sequenz. Die Periodendauer für eine Sequenz ist in diesem Beispiel mit 2 ms angenommen. Innerhalb jeder Sequenz wiederholen sich die einzelnen Impulse des Sendesignales ss nach Phase und Amplitude in identischen Wellenformen. Die Zeitdauer für einen der acht Sendeimpulse jeder Sequenz beträgt 250 µs. Wohl wiederholt sich auch das Kompensationssignal ks im gleichen Zeitraster mit entsprechenden Sequenzen. Im Unterschied zum Sendesignal ss sind aber die einzelnen Impulse des Kompensationssignales ks weder nach Phase noch hinsichtlich der Amplitude mit dem zeitgleichen Impuls des Sendesignales ss identisch. Sie sind vielmehr charakteristisch für die Eigenschaften der jeweils zugeordneten Induktionsschleife 1. Phasen- und Amplitudenwerte für die jeweils einer der Induktionsschleifen 1 zugeordneten Impulse des Kompensationssignals ks werden in einem Abgleichvorgang gewonnen und in dem dem Signalprozessor 11 zugeordneten Festwertspeicher 14 gespeichert.

Die bereits im Zusammenhang mit Figur 2 erläuterte Schleifenumschaltung erfolgt durch den Multiplexer 9, dem zu diesem Zweck von der Prozessoreinheit 10 die Auswahlsignale as zugeführt werden. Um diese Schleifenumschaltung mit den durch den Signalprozessor 11 erzeugten Impulsen des Sendesignales ss bzw. des Kompensationssignales ks zeitlich zu synchronisieren, werden über den weiteren Zwischenspeicher 15' Steuersignale sowohl an die Prozessoreinheit 10 als auch an einzelne Schaltungseinheiten eines noch zu erläuternden Auswertezweiges der Schaltungsanordnung von Figur 3 abgegeben.

Dabei handelt es sich unter anderem um eine Folge von Interruptsignalen INT bzw. Schleifensteuersignalen LO, die vom Signalprozesor 11 über den weiteren Zwischenspeicher 15' an die Prozessoreinheit 10 geliefert werden, deren Impulsformen ebenfalls in Figur 4 dargestellt sind. Die Folge der Interruptsignale INT synchronisiert die Prozessoreinheit 10 auf die Impulsfolge des Sende- und des Kompensationssignals ss bzw. ks, derart daß diese unter anderem die Auswahlsignale as an den Multiplexer 9 synchron mit diesen Impulsfolgen abgibt und der Multiplexer 9 während der Austastlücken dieser Signale umschaltet. Vergleicht die in Figur dargestellten Impulsfolgen der Interruptsignale und des Schleifensteuersignals LO miteinander, so wird klar, daß die Prozessoreinheit 10 mit dem Schleifensteuersignal LO auf die jeweilige Sequenz des Sende- und des Kompensationssignals ss bzw. ks abgestimmt wird. Diese Maßnahme dient der Funktionssicherheit, indem sie den Gleichlauf von Prozessoreinheit 10 und Signalprozessor 11 mit jeder Sequenz bzw. Auswertezeit für die an den Multiplexer 9 angeschlossene Gruppe von Induktivschleifen 1 erneut herstellt.

In diesem Zusammenhang wird auf ein weiteres in Figur 4 dargestelltes Steuersignal, ein Spurfolgesignal TR hingewiesen, dessen abfallende Flanke zeitlich auf die Maximalamplitude der Impulse s1 bis s8 des Sendesignals ss abgestimmt ist. Wie noch zu zeigen sein wird, dient es dazu, Funktionsabläufe in der Auswerteeinrichtung für die am Summenpunkt S abgenommenen Meßspannung mit den auf der Sendeseite generierten Pulssequenzen zu synchronisieren.

Zurückkehrend zu Figur 3 ist in dem zwischen dem Summenpunkt S und der Prozessoreinheit 10 angeordneten Empfangskreis ein an den Summenpunkt S angeschlossener Vorverstärker 21 vorgesehen. Dessen Ausgangssignal wird über einen Kommutator , d. h. einen phasengesteuerten Gleichrichter 22 einem Empfangsfilter 23 zugeführt. An dieses ist ein Empfangsverstärker 24 angeschlossen, dessen Ausgangssignal einer weiteren Abtastund Halteeinheit 25 zugeführt wird. An diese ist ein Analog-Digital-Wandler 26 angeschlossen, dessen parallele Ausgänge mit Dateneingängen der Prozessoreinheit 10 verbunden sind. Dabei stellt der phasengesteuerte Gleichrichter 22 sicher, die am Summenpunkt S abgegriffene und über den Vorverstärker 21 verstärkte analoge Spannung in bezug auf das Kompensationssignal ks phasengesteuert gleichzurichten. Diese Maßnahme ermöglicht eine einfache Bandbreitenbegrenzung bei der weiteren Auswertung der am Summenpunkt S abgegriffenen analogen Meßsignale. Im daran angeschlossenen Empfangsfilter 23 wird das Ausgangssignal des phasengesteuerten Gleichrichters 22 in seiner Bandbreite begrenzt und anschließend durch den Empfangsverstärker 24 verstärkt der Abtast- und Halteeinheit 25 zugeführt. Die wird durch das bereits erwähnte Spurfolgesignal TR aktiviert. Definiert man als steuernde Flanke dieses Signals seinen Übergang von niedrigem auf hohen Pegel, so verdeutlicht die Darstellung seiner Impulsfolge folgendes: Das Spurfolgesignal TR aktiviert die weitere Abtast- und Halteeinheit 25 mit einer gewissen Verzögerungszeit nach der Maximalamplitude jedes Impulses des Kompensationssignals ks. Diese Verzögerung berücksichtigt die Signallaufzeit des am Summenpunkt abgegriffenen Meßsignals bis zum Eingang der weiteren Abtast- und Halteeinheit 25, wobei diese Signallaufzeit insbesondere durch die Filterlaufzeit des Empfangsfilters 23 bestimmt ist. Mit dieser Maßnahme wird erreicht, daß die Abtast- und Halteeinheit 25, den Maximalwert des aufbereiteten Meßsignals abtastet und für den angeschlossenen Analog-Digital-Wandler 26 hält. Ersichtlich wird auf diese Weise der Rechenaufwand in der Prozessoreinheit 10 verringert, der die digitalisierte Maximalamplitude des am Summenpunkt abgegriffenen Meßsignals zugeführt wird, um daraus ein entsprechendes Detektorsignal für die jeweils selektierte Induktivschleife 1 abzuleiten.

Im Ausführungsbeispiel von Figur 4 ist, wie bereits ausgeführt, eine Periodendauer von 2 ms für eine Sequenz des Sende- und Kompensationssignales ss bzw. ks angenommen. Diese Periodendauer entspricht mit anderen Worten der benötigten Auswertezeit für die angeschlossene Gruppe von acht Induktivschleifen 1. Entsprechend ergibt sich eine Impulsdauer von 250 µs für den einzelnen Impuls des Sendesignals ss bzw. des Kompensationssignals ks. Bezogen auf diese Impulsdauer beträgt die optimale, durch das Empfangsfilter 23 begrenzte Bandbreite des aufbereiteten Meßsignales 4 kHz. Je nach der realisierten Filtergüte des Empfangsfilters 23 wäre es damit möglich, weitere Gruppen von Induktivschleifen 1 in einem Frequenzabstand von nur einigen kHz zu betreiben, ohne deswegen Störungen durch Überkopplung usw. befürchten zu müssen.

Diese Bandbreitenbegrenzung der Meßsignale bei den beschriebenen Ausführungsbeispielen ist somit insbesondere dann von großem Vorteil, wenn bei einer komplexeren Verkehrssignalanlage eine Vielzahl von Induktivschleifen vorzusehen ist. In diesem Falle wären entsprechende weitere Gruppen von Induktivschleifen zu bilden, die im Kombination mit ihren jeweiligen Sende- und Empfangszweigen - über die Darstellung von Figur 3 hinausgehend an die Busleitung 12 bzw. die Dateneingangsseite der Prozessoreinheit 10 anzuschließen sind.

## Patentansprüche

1. Fahrzeugdetektor mit mindestens einer Induktivschleife als Sensor, einer Oszillatorschaltung zum Anregen dieser Induktivschleife, einer Abtastschaltung zum Feststellen des Funktionszustandes der Induktivschleife und mit an einer an die Abtastschaltung angeschlossenen Auswerteeinrichtung zum Ableiten von einem dem Momentanzustand der Induktivschleife entsprechenden Detektorsignal, **dadurch gekennzeichnet,** daß die Oszillatorschaltung einen Festfrequenzoszillator (4), der zum Anregen der Induktivschleife durch ein Sendesignal (ss) an einen ihrer zwei Anschlüsse (2 bzw. 3) direkt angeschlossen ist und ferner einen zwischen dem Festfrequenzoszillator und dem anderen, einen Summenpunkt (S) bildenden Anschluß der Induktivschleife angeordneten Phasen-/Amplitudenregler (5) zum Zuführen eines Kompensationssignales (ks) aufweist, so daß die Induktivschleife, der Festfrequenzoszillator und der Phasen-/Amplitudenregler eine Brückenschaltung bilden, die im Ruhezustand der Induktivschleife am Summenpunkt auf Spannung Null abgeglichen ist und daß die an dem Summenpunkt angeschlossene Abtastschaltung (6, 7, 8) als Spannungsmesser ausgebildet ist.

2. Fahrzeugdetektor nach Anspruch 1, **dadurch gekennzeichnet,** daß der Festfrequenzgenerator (4) als ein mit einer vorgegebenen Pulsfrequenz getastet schwingender Oszillator ausgebildet ist, dessen Sendesignal (ss) aus Sendeimpulsen (z. B. s1) in Form einer weich einsetzenden, amplitudenmodulierten, hochfrequenten Schwingung gebildet ist.

3. Fahrzeugdetektor nach Anspruch 2, **dadurch gekennzeichnet,** daß die an den Summenpunkt (S) angeschlossene Abtastschaltung einen phasengesteuerten Gleichrichter (7 bzw. 22) aufweist, dessen Steuereingang das Kompensationssignal (ks) zugeführt ist.

4. Fahrzeugdetektor nach Anspruch 3, **dadurch gekennzeichnet,** daß in der Abtastschaltung (6 bis 8 bzw. 21 bis 26) ein an den Ausgang des phasengesteuerten Gleichrichters (7 bzw. 22) angeschlossenes, als Schmalbandfilter ausgebildetes Empfangsfilter (23) vorgesehen ist, dessen Bandbreite auf eine durch die Abtastschaltung vorgegebene Auswertezeit für den Zustand der mindestens einen Induktivschleife (1) bezogen ist.

5. Fahrzeugdetektor nach einem der Ansprüche 1 bis 4, der in an sich bekannter Weise eine Gruppe von Induktivschleifen umfaßt, **dadurch gekennzeichnet,** daß die ersten Anschlüsse (2) der Induktivschleifen (1) parallel an den Festfrequenzgenerator (4) angeschlossen sind und ein Multiplexer (9) vorgesehen ist, dessen Eingang über den dann gemeinsamen Summenpunkt (S) an den Ausgang des Phasen-/Amplitudenreglers (5)und dessen Multiplexausgänge zum sequentiellen Anschalten der einzelnen Induktivschleifen an den gemeinsamen Summenpunkt jeweils mit den zweiten Anschlüssen (3) der Induktivschleifen verbunden sind, wobei die an diesen gemeinsamen Summenpunkt angeschlossene Abtastschaltung (6, 7, 8) sequentiell die Momentanzustände der einzelnen Induktivschleifen bewertet.

6. Fahrzeugdetektor nach Anspruch 5, **dadurch gekennzeichnet,** daß der Multiplexer (9) zum sequentiellen Umschalten von einer Induktivschleife (1) auf die nächste derart angesteuert ist, daß dieses Umschalten jeweils im Nullbereich des Sendesignals (ss) des Festfrequenzgenerators (4) erfolgt.

7. Fahrzeugdetektor nach einem der Ansprüche 4 bis 6, **dadurch gekennzeichnet,** daß die Oszillatorschaltung (4, 5) als prozessorgesteuerte Digitalschaltung (11 bis 18 sowie 15' bis 18') ausgebildet ist.

8. Fahrzeugdetektor nach Anspruch 7, **dadurch gekennzeichnet,** daß die als Digitalschaltung ausgebildete Oszillatorschaltung (4, 5) als steuernde Einheit einen Signalprozessor (11) aufweist, der mit Zwischenspeicherregistern (15, 15') zum Zwischenspeichern von digitalisierten Momentanwerten des Sende- und Kompensationssignales (ss bzw. ks) verbunden ist, daß an parallele Ausgänge dieser Zwischenspeicherregister jeweils ein Digital-Analog-Wandler (16 bzw. 16') angeschlossen ist, deren analoge Ausgänge jeweils über eine Abtast- und Halteeinheit (17 bzw. 17') an einen Endverstärker (18 bzw. 18') angeschlossen sind, der seinerseits mit den ersten Anschlüssen (2) der Induktivschleifen (1) bzw. über den Summenpunkt (S) mit dem Eingang des Multiplexers (9) verbunden ist.

9. Fahrzeugdetektor nach einem der Ansprüche 7 oder 8, **dadurch gekennzeichnet,** daß die Abtastschaltung (6, 7, 8) - wie die Oszillatorschaltung (4, 5 bzw. 11 bis 18 sowie 15' bis 18') - als Digitalschaltung ausgebildet ist, der als Auswerteeinheit eine Prozessoreinheit (10) zugeordnet ist, die mit der steuernden Einheit der Oszillatorschaltung in einer Master-Slave-Konfiguration verbunden ist.

10. Fahrzeugdetektor nach Anspruch 9, **dadurch gekennzeichnet,** daß in der Abtastschaltung (21 bis 26), an den Summenpunkt (S) angeschlossen, ein analoger Empfangsverstärker (21) vorgesehen ist, an dessen Ausgang in Serie der phasengesteuerte Gleichrichter (22), das Empfangsfilter (23) sowie ein Analog-Digitalwandler (26) angeschlossen sind, der seierseits mit der Prozessoreinheit (10) verbunden ist.

11. Verfahren zur Fahrzeugdetektion mittels eines Fahrzeugdetektors mit mindestens einer Induktivschleife als Sensor, einer Oszillatorschaltung zum Anregen dieser Induktivschleife, einer Abtastschaltung zum Feststellen des Funktionszustandes der Induktivschleife und mit an einer an die Abtastschaltung angeschlossenen Auswerteeinrichtung zum Ableiten von einem dem Momentanzustand der Induktivschleife entsprechenden Detektorsignal, **dadurch gekennzeichnet,** daß der mindestens einen Induktivschleife (1) über einen ersten Anschluß (2) ein hochfrequentes Sendesignal (ss) mit einer vorgegebenen festen Frequenz und über einen zweiten Anschluß (3) ein aus dem Sendesignal amplituden- und phasengeregelt abgeleitetes Kompensationssignal (ks) derart zugeführt wird, daß sich Sendesignal und Kompensationssignal, bezogen auf die resultierende Spannung an einem Summenpunkt (S), der mit diesem zweiten Anschluß der Induktivschleife übereinstimmt, in deren Ruhezustand zu Null summieren, daß die Spannung an diesem Summenpunkt abgetastet wird und daß aus einer vom Wert Null abweichenden Spannung an diesem Summenpunkt ein Detektionssignal für die Anwesenheit eines Fahrzeugs im Erfassungsbereich der Induktionsschleife abgeleitet wird.

12. Verfahren zur Fahrzeugdetektion mittels eines Fahrzeugdetektors nach Anspruch 11, an den in an sich bekannter Weise eine Gruppe von Induktionsschleifen angeschlossen ist, **dadurch gekennzeichnet,** daß das Sendesignal (ss) den jeweils ersten Anschlüssen (2) der Induktivschleifen (1) parallel zugeführt wird, daß jeweils einer der Induktivschleifen individuell zugeordnete Impulse des Kompensationssignales (ks) deren zweiten Anschlüssen (3) in einem sequentiellen Schleifenumlauf über den gemeinsamen Summenpunkt (S) zeitmultiplex zugeführt werden und daß damit synchronisiert die Spannung an diesem gemeinsamen Summenpunkt zum Ableiten der Detektionssignale für jede Induktivschleife abgegriffen wird.

13. Verfahren zur Fahrzeugdetektion mittels eines Fahrzeugdetektors nach Anspruch 12, **dadurch gekennzeichnet,** daß das Sendesignal (ss) als ein getasteter Puls ausgebildet wird, dessen aufeinanderfolgende Impulse in Form einer weich einsetzenden, amplitudenmondulierten hochfrequenten Schwingung mit einer vorgegebenen Frequenz ausgebildet sind und daß die zeitmulitiplex erfolgende Umschaltung der Auswertung des Zustandes einer der Induktivschleifen (1) auf die nächste jeweils in einem Nullbereich des Sendesignais vorgenommen wird.

14. Verfahren zur Fahrzeugdetektion mittels eines Fahrzeugdetektors nach einem der Ansprüche 12 oder 13, **dadurch gekennzeichnet,** daß das am Summenpunkt (S) abgegriffene analoge Signal zur Auswertung vorverstärkt, anschließend phasengesteuert gleichgerichtet wird, danach bandpaßgefiltert und damit auf ein seiner Auswertezeit entsprechendes Frequenzband begrenzt wird und daß aus diesem so aufbereiteten Signal schließlich das Detektorsignal abgeleitet wird.
